# EUROPÄISCHE PATENTSCHRIFT

(11) **EP 2 160 437 B1**
(45) Veröffentlichungstag und Bekanntmachung des Hinweises auf die Patenterteilung: **22.05.2013**
(21) Anmeldenummer: 08717884.4
(22) Anmeldetag: 17.03.2008
(51) Int. Cl.: C08J 5/18, B32B 27/08, C09D 133/10, C09D 127/16

(54) **PMMA/PVDF-FOLIE MIT BESONDERS HOHER WITTERUNGSBESTÄNDIGKEIT UND HOHER UV-SCHUTZWIRKUNG**
PMMA/PVDF FILM WITH PARTICULARLY HIGH WEATHERING STABILITY AND HIGH UV PROTECTIVE ACTION
FEUILLE PMMA/PVDF PRÉSENTANT UNE RÉSISTANCE AUX INTEMPÉRIES PARTICULIÈREMENT ÉLEVÉE ET UNE ACTION DE PROTECTION ÉLEVÉE CONTRE LES UV

(30) Priorität: 22.06.2007 DE 102007029263
(43) Veröffentlichungstag der Anmeldung: 10.03.2010
(73) Patentinhaber: Evonik Röhm GmbH, 64293 Darmstadt (DE)
(72) Erfinder: NUMRICH, Uwe, 64846 Gross-Zimmern (DE); NEUHÄUSER, Achim, 55128 Mainz (DE); ARNDT, Thomas, 64750 Lützelbach (DE); GOLDACKER, Thorsten, 64380 Rossdorf (DE); LASCHITSCH, Alexander, 60314 Frankfurt (DE); DICKHAUT-BAYER, Günther, 64560 Riedstadt (DE)
(86) Internationale Anmeldenummer: PCT/EP2008/053147
(87) Internationale Veröffentlichungsnummer: WO 2009/000566

(56) Entgegenhaltungen:
- EP-A- 1 382 640
- EP-A- 1 566 408
- WO-A-00/33975
- AU-A1- 2005 234 631

## Beschreibung

### Gebiet der Erfindung

Die Erfindung betrifft eine transparente ein- oder mehrschichtige (mehrlagige) Kunststofffolie, umfassend Polymethyl(meth)acrylat (PMMA) und Polyvinylidenfluorid (PVDF) jeweils in wenigstens einer Lage oder PMMA und PVDF in Mischung in wenigstens einer Lage. Die Folie weist eine besonders hohe UV-Stabilität auf und verfügt über eine sehr hohe Witterungsstabilität. Verwendung findet die erfindungsgemäße Folie beispielsweise als Oberflächenschutzfolie für Polyvinychlorid (PVC) - Fensterprofile. Ferner betrifft die Erfindung ein Verfahren zur Herstellung von PMMA/PVDF-Folien mit besonders hoher Witterungsbeständigkeit und hoher UV-Schutzwirkung.

### Stand der Technik

Polymethyl(meth)acrylat weist eine sehr hohe Witterungsbeständigkeit auf und eignet sich daher besonders für alle Anwendungen in bewitterten Außenbereichen. Aus diesem Grund haben sich PMMA-Folien für den Einsatz als Oberflächenschutzfolien für farbige Polyvinylchlorid (PVC) - Fensterprofile am Markt etabliert.

Das fertige Profil muss einen Anforderungstest gemäß der RAL-Gütegemeinschaft bestehen, der unter anderem eine Prüfung der Witterungsbeständigkeit vorsieht. Am Markt erhältliche Standardprodukte, die beispielsweise von der Röhm GmbH unter der Bezeichnung Plexiglas^{®} Folie farblos 99845 vertrieben werden, zeigen in Dauertests (beispielsweise dem Xenotest nach ISO 4892-2), dass ihre Bewitterungsstabilität zwar den derzeitigen Anforderungen entspricht, aber noch zu verbessern ist.

Darüber hinaus gibt es eine steigende Nachfrage nach Oberflächenschutzfolien, die die bestehenden Anforderungen an die Bewitterungsstabilität der Oberflächenschutzfolien deutlich übertreffen. Die bisher am Markt erhältlichen Folien setzen zur Stabilisierung gegen UV-Strahlen (Wellenlängen zwischen 300 und 400 nm) meist UV-Absorber des Benztriazol-Typs ein. Diese UV-Absorber werden beispielsweise unter der Marke Tinuvin P (2-(2'-Hydroxy-5'-methylphenyl)-benzotriazol)) von Ciba Specialty Chemicals Inc. vertrieben. Von diesen UV-Absorbern ist bekannt, dass sie über einen Zeitraum von 10 Jahren ihre Wirksamkeit signifikant einbüßen. Die damit ausgerüsteten Witterungsschutzfolien werden erst matt, dann bilden sich Mikrorisse und dann Risse. Allerdings haben diese UV-Absorber auch vorteilhafte Eigenschaften: sie sind farbneutral (geringer Gelbwert), schwerflüchtig (wichtig für die Extrusion der Folien) und preiswert.

JP 2005-97351 (Mitsubishi Rayon) beschreibt eine Folie aus PMMA, die eine ausgezeichnete Stabilität gegenüber Parfümen und in der Haarpflege und - kosmetik eingesetzten Verbindungen aufweist. Der Effekt wird durch die Verwendung einer Mischung aus UV-Absorbern mit einem Schmelzpunkt nicht unter 180 ° Celsius mit einem sterisch gehinderten Amin (HALS = "hindered amine light stabilizer") erreicht. Im Vordergrund stehen die gute Alterungsbeständigkeit der Folie bei thermischer Belastung und ihre hohe Lösungsmittelbeständigkeit. Die Folie besteht dabei aus mehreren Lagen unterschiedlicher Zusammensetzungen. Der UV-Absorber kann sowohl ein Benztriazol als auch ein Triazin sein. Vorteile hinsichtlich der Witterungsbeständigkeit werden durch die Anmeldung nicht beschrieben.

JP-OS 2004-338222 beschreibt eine Acrylat-Folie mit erhöhter Fluoreszenzdauer. Man verwendet dazu eine Folie, die mit einem spezifischen UV-Absorber ausgerüstet ist und ordnet über der Folie eine weitere Folie an, die mit einem Fluoreszenzfarbstoff ausgerüstet ist. Fluoreszenzfarbstoffe sind bekanntermaßen wenig stabil gegen UV-Strahlung. Als UV-Absorber kommen Benztriazole, Triazole und Benzophenone oder Kombinationen dieser Absorber in Frage. Positive Einflüsse auf die Eigenstabilität des PMMA oder auf nichtfluoreszierende Farben wurden nicht offenbart.

EP 1 022 311 A1 beschreibt eine Acryl-Folie mit unter Erhalt der Lösemittelbeständigkeit erhöhter Bruchdehnung und verbesserter Beständigkeit gegen Trübung unter dem Einfluß von heißem Wasser. Die erhöhte Bruchdehnung soll die Folie dazu befähigen, auch bei sehr geringen Biegeradien und/oder hohen Verformungsgeschwindigkeiten ohne Bruch verformbar zu sein. Dazu wird eine spezielle Rezeptur verwendet, die unter anderem eine acrylbasierte thermoplastische Komponente mit einer Glasübergangstemperatur kleiner oder gleich 65°C und einem mittlerem Molekulargewicht zwischen 100.000 und 300.000 beinhaltet.

Ciba empfiehlt in ihren Firmenschriften die Kombination von UV-Absorbern mit HALS-Verbindungen zur Stabilisierung von PMMA.

In WO 00/33975 und AU 2005 234 631 wird die Beschichtung von Kunststofffolien, insbesondere von Polyesterfolien mit Schutzfolien die aus PVDF und PMMA zusammengesetzt sind und einen PVDF-Anteil von mindestens 65 Gew% aufweisen, beschrieben. Der Fokus lag hier auf einen allgemeinen Schutz der Oberfläche und eventuell dekorative Effekte. Diese Zusammensetzungen bieten jedoch unter extremen Bedingungen keinen ausreichenden UV-Schutz.

### Aufgabe

Es bestand die Aufgabe, eine Folie basierend auf PMMA zu schaffen, welche die bisher am Markt befindlichen Folienqualitäten in der Bewitterungsstabilität übertrifft. Insbesondere soll die Stabilität über einen längeren Zeitraum (>10 Jahre = Langzeitstabilität) verbessert werden. Unter Stabilität wird sowohl die Eigenstabilität der Folie gegen UV- und Witterungseinflüsse als auch die Stabilität der UV-Schutzwirkung (abzulesen beispielsweise an der Stabilität des Farborts einer mit der Schutzfolie abgedeckten Farbschicht) verstanden.
- Darüber hinaus soll die stabilere Folie mit einem möglichst farbneutralen UV-Paket stabilisiert sein.
- Daneben sollen die einzelnen Komponenten zur Herstellung der Folie bei der Verarbeitung in einer Extrusionsanlage in möglichst geringem Ausmaß ausgasen.
- Die zur Stabilisierung der Folie eingesetzten Additive sollen ebenso wie die Gesamtfolie möglichst kostengünstig sein.
- Die Migration einer oder mehrerer Komponenten des UV-Pakets an die Oberfläche der Folie soll möglich sein.
- Ein möglichst breites Wellenlängenspektrum (300 nm - 400 nm) soll abgedeckt werden.
- Die Folie soll weitgehend frei von Weißknick sein.
- Es sollen Komponenten zum Einsatz kommen, die einen wirtschaftlichen Betrieb einer Extrusionsanlage ermöglichen.
- Die Folie soll über eine ausgezeichnete Witterungsbeständigkeit verfügen.
- Die Folie soll eine sehr gute Chemikalienbeständigkeit, beispielsweise gegen handelsübliche Reinigungsmittel, aufweisen.
- Die Folie soll, um die Reinigung zu erleichtern, schmutzabweisende Eigenschaften aufweisen.

### Lösung

Gelöst werden die vorstehend diskutierten Aufgaben sowie weitere nicht einzeln genannte, jedoch ohne weiteres für den Fachmann aus der einleitenden Diskussion ableitbare Aufgaben durch eine Folie mit allen Merkmalen des unabhängigen Produktanspruchs. Bevorzugte Ausführungsformen der erfindungsgemäßen Folie sind Gegenstand der auf den unabhängigen Produktanspruch bezogenen abhängigen Ansprüche. Ein Verfahren zur Herstellung der erfindungsgemäßen Folie wird im unabhängigen Anspruch der Verfahrenskategorie unter Schutz gestellt. Bevorzugte Verfahrensmodifikationen entnimmt man den abhängigen Verfahrensansprüchen. Schließlich werden bevorzugte Einsatzbereiche der erfindungsgemäßen Folie in den Verwendungsansprüchen offenbart.

Dadurch, dass eine Folie aus Kunststoff
a) Poly(meth)acrylat und Polyvinylidenfluorid in einem Verhältnis von 1 : 0,01 bis 1 : 1 (w/w);
   und
b) eine Mischung aus UV-Stabilisatoren und UV-Absorbern
umfaßt, gelingt es auf eine für den Fachmann nicht ohne weiteres absehbare Weise, eine transparente Folie mit hohem Witterungsschutz und hohem UV-Schutz bereitzustellen, die zudem noch über eine Reihe weiterer Vorteile verfügt. Hierzu gehören unter anderem
- Eine verbesserte Bewitterungsstabilität gegenüber bisher am Markt befindlichen Folienqualitäten.
- Eine verbesserte Langzeitbewitterungsstabilität.
- Eine verbesserte Eigenstabilität der Folie gegen UV- und Witterungseinflüsse.
- Eine verbesserte Stabilität der UV-Schutzwirkung (abzulesen beispielsweise an der Stabilität des Farborts einer mit der Schutzfolie abgedeckten Farbschicht).
- Hohe Farbneutralität der stabilen Folie unter anderem aufgrund eines äußerst farbneutralen UV-Pakets.
- Günstige Verarbeitungseigenschaften bei einer Extrusion, da die einzelnen Komponenten zur Herstellung der Folie bei der Verarbeitung in einer Extrusionsanlage nicht oder nur äußerst wenig ausgasen.
- Die zur Stabilisierung der Folie eingesetzten Additive sind kostengünstig.
- Die Gesamtfolie ist sehr kostengünstig.
- Die Migration einer oder mehrerer Komponenten des UV-Pakets an die Oberfläche der Folie ist möglich.
- Es wird ein möglichst breites Wellenlängenspektrum (300 nm - 400 nm) abgedeckt.
- Die Folie ist frei von Weißknick.

Im Hinblick auf das Verfahren werden die der Erfindung zugrunde liegenden Aufgaben einerseits gelöst durch ein Verfahren zur Herstellung einer transparenten Folie aus Kunststoff mit hohem Witterungsschutz und hohem UV-Schutz,
bei welchem Verfahren man
aus einer Zusammensetzung umfassend
a) Poly(meth)acrylat und Polyvinylidenfluorid in einem Verhältnis von 1 : 0,01 bis 1 : 1 (w/w);
   und
b) eine Mischung aus UV-Stabilisatoren und UV-Absorbern eine Folie in einem Folienformungsverfahren, vorzugsweise nach dem an sich bekannten Chill-Roll Verfahren, formt.

Andererseits werden die der Erfindung zugrunde liegenden Aufgaben in verfahrenstechnischer Hinsicht gelöst durch ein Verfahren zur Herstellung einer transparenten mehrlagigen Folie aus Kunststoff mit hohem Witterungsschutz und hohem UV-Schutz,
bei welchem Verfahren man
eine Poly(meth)acrylat-Folie und eine Polyvinylidenfluorid-Folie miteinander kaschiert oder coextrudiert, wobei eine oder beide der Folien eine Mischung aus UV-Stabilisatoren und UV-Absorbern enthalten, oder wobei eine der Folien wenigstens einen UV-Stabilisator und die andere der Folien wenigstens einen UV-Absorber enthält und wobei die kaschierte oder coextrudierte Mehrlagenfolie das Poly(meth)acrylat und Polyvinylidenfluorid in einem Verhältnis von 1 : 0,01 bis 1 : 1 (w/w) aufweist.

Die PMMA/PVDF-Folie kann demnach einlagig (erste Verfahrensvariante) oder mehrlagig (zweite Verfahrensvariante) erhalten werden, wobei nach beiden Varianten alle beim Produkt genannten Vorteile realisierbar sind.

Im Hinblick auf die Verwendung des Produkts sind die erfindungsgemäßen PMMA/PVDF Folien besonders vorteilhaft zum Beschichten von Kunststoffformkörpern einzusetzen.

Dabei werden die PMMA/PVDF-Folien der Erfindung zweckmäßig zur Gestaltung einer hochwertigen und dauerhaften Oberflächenvergütung von Substratwerkstoffen eingesetzt.

### Durchführung der Erfindung

### Herstellung der PMMA-Kunststoffe

Polymethylmethacrylat-Kunststoffe werden im allgemeinen durch radikalische Polymerisation von Mischungen erhalten, die Methylmethacrylat enthalten. Im allgemeinen enthalten diese Mischungen mindestens 40 Gew.-%, vorzugsweise mindestens 60 Gew.-% und besonders bevorzugt mindestens 80 Gew.-%, bezogen auf das Gewicht der Monomere, Methylmethacrylat.

Daneben können diese Mischungen zur Herstellung von Polymethylmethacrylaten weitere (Meth)acrylate enthalten, die mit Methylmethacrylat copolymerisierbar sind. Der Ausdruck (Meth)acrylate umfaßt Methacrylate und Acrylate sowie Mischungen aus beiden. Diese Monomere sind weithin bekannt. Zu diesen gehören unter anderem (Meth)acrylate, die sich von gesättigten Alkoholen ableiten, wie beispielsweise Methylacrylat, Ethyl(meth)acrylat, Propyl(meth)acrylat, n-Butyl(meth)acrylat, tert.-Butyl(meth)acrylat, iso-Butyl-(meth)acrylat, Pentyl(meth)acrylat und 2-Ethylhexyl(meth)acrylat; ferner (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat; weiter Aryl(meth)acrylate, wie Benzyl(meth)acrylat oder Phenyl(meth)acrylat, wobei die Arylreste jeweils unsubstituiert oder bis zu vierfach substituiert sein können; Cycloalkyl(meth)acrylate, wie 3-Vinylcyclohexyl(meth)acrylat, Bornyl(meth)acrylat; Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat; Glycoldi(meth)acrylate, wie 1,4-Butandiol(meth)acrylat, (Meth)acrylate von Etheralkoholen, wie Tetrahydrofurfuryl(meth)acrylat, Vinyloxyethoxyethyl(meth)acrylat; Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol; schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; mehrwertige (Meth)acrylate, wie Trimethyloylpropantri(meth)acrylat.

### Radikalinitiatoren

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxid, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

### Weitere Monomere

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind. Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1; Acrylnitril; Vinylester, wie beispielsweise Vinylacetat; Styrol, substituierte Styrole mit einem Alkylsubstituenten in der Seitenkette, wie z. B. α-Methylstyrol und α-Ethyistyrol, substituierte Styrole mit einem Alkylsubstituenten am Ring, wie beispielsweise Vinyltoluol und p-Methylstyrol, halogenierte Styrole, wie beispielsweise Monochlorstyrole, Dichlorstyrole, Tribromstyrole und Tetrabromstyrole; Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole; Vinyl- und Isoprenylether; Maleinsäurederivate, wie beispielsweise Maleinsäureanhydrid, Methylmaleinsäureanhydrid, Maleinimid, Methylmaleinimid; und Diene, wie beispielsweise Divinylbenzol.

Im allgemeinen werden diese Comonomere in einer Menge von 0 Gew.-% bis 60 Gew.-%, vorzugsweise 0 Gew.-% bis 40 Gew.-% und besonders bevorzugt 0 Gew.-% bis 20 Gew.-%, bezogen auf das Gewicht der Monomeren, eingesetzt, wobei die Verbindungen einzeln oder als Mischung verwendet werden können.

Die erfindungsgemäße Folie lässt sich in besonders überzeugender Weise mit einem Poly(meth)acrylat verwirklichen polymerisierbare Bestandteile:
a. > 50 Gew.-% bis 99,9 Gew.-% Methylmethacrylat,
b. 0,1 Gew.-% bis < 50 Gew.-% eines Acrylats mit einem Esterrest stammend von einem C1 - C4 Alkohol,
c. 0 Gew.-% bis 10 Gew.-% mit den Monomeren a. und b. copolymerisierbare Monomere.

Noch mehr bevorzugt ist eine Folie mit einem Poly(meth)acrylat, welches durch Polymerisation einer Zusammensetzung erhältlich ist aufweisend als polymerisierbare Bestandteile:
a. 88 Gew.-% bis 92 Gew.-% Methylmethacrylat,
b. 8 Gew.-% bis12 Gew.-% eines Acrylats mit einem Esterrest stammend von einem C1 - C4 Alkohol,
c. 0 Gew.-% bis 10 Gew.-% mit den Monomeren a. und b. copolymerisierbare Monomere.

Überraschenderweise hat sich herausgestellt, dass es mit einem Coacrylatanteil im Bereich von 8 bis 12 Gewichtsprozent, vorzugsweise mit einem n-Butylacrylat in dieser Menge, gelingt, die Eigenstabilität der Folie deutlich über das bislang bekannte Maß hinaus zu steigern. Dies war so nicht ohne weiteres absehbar gewesen. Je höher der Coacrylatanteil gewählt wird, desto höher wird die Stabilität der Folie. Darüber hinaus ist eine Erhöhung über die Grenzwerte hinaus wiederum nachteilig, da die zusätzlichen Anteile an Coacrylat keine nennenswerte zusätzliche Unterdrückung der Rißbildung bewirken.

### Regler

Die Einstellung der Kettenlängen der Polymerisate kann durch Polymerisation des Monomerengemisches in Gegenwart von Molekulargewichtsreglern erfolgen, wie insbesondere von den dafür bekannten Mercaptanen, wie beispielsweise n-Butylmercaptan, n-Dodecylmercaptan, 2-Mercaptoethanol oder 2-Ethylhexylthioglycolat, Pentaerythrittetrathioglycolat; wobei die Molekulargewichtsregler im allgemeinen in Mengen von 0,05 bis 5 Gew.-% bezogen auf das Monomerengemisch, bevorzugt in Mengen von 0,1 bis 2 Gew.-% und besonders bevorzugt in Mengen von 0,2 bis 1 Gew.-% auf das Monomerengemisch eingesetzt werden (vgl. beispielsweise H. Rauch-Puntigam, Th. Völker, "Acryl- und Methacrylverbindungen", Springer, Heidelberg, 1967; Houben-Weyl, Methoden der organischen Chemie, Bd. XIV/1, Seite 66, Georg Thieme, Heidelberg, 1961 oder Kirk-Othmer, Encyclopedia of Chemical Technology, Vol. 1, Seiten 296ff, J. Wiley, New York, 1978).

### Schlagzähmodifizierter Poly(meth)acrylat-Kunststoff

Das Poly(meth)acrylat a) ist bevorzugt schlagzäh mit einem Schlagzähmodifizierer ausgerüstet.

In einer bevorzugten Variante ist die Menge an Schlagzähmodifizierer zwischen 1 Gew.-% und 50 Gew.-%, bezogen auf die Summe aus Poly(meth)acrylat und Schlagzähmodifizierer.

In noch einer bevorzugten Variante besteht der schlagzäh modifizierte Poly(meth)acrylat-Kunststoff aus 20 Gew.-% bis 80 Gew.-%, bevorzugt 30 Gew.-% bis 70 Gew.-% einer Poly(meth)acrylat-Matrix und 80 Gew.-% bis 20 Gew.-%, bevorzugt 70 Gew.-% bis 30 Gew.-% Elastomerteilchen mit einem mittleren Teilchendurchmesser von 10 bis 150 nm (Messungen z. B. mit der Ultrazentrifugenmethode).

Vorzugsweise stammen das Poly(meth)acrylat a) und der Schlagzähmodifizierer aus einem Kern-Schale Polymerisat, wobei die Schale in der späteren Folie eine Matrix aus Polymer ausbildet.

Bevorzugt weisen die in der Poly(meth)acrylat-Matrix verteilten Elastomerteilchen einen Kem mit einer weichen Elastomerphase und einer daran gebundenen Hartphase auf.

Der schlagzähmodifizierte Poly(meth)acrylat-Kunststoff (sz-PMMA) besteht aus einem Anteil Matrixpolymer, polymerisiert aus mindestens 80 Gew.-% Einheiten Methylmethacrylat sowie gegebenenfalls 0 Gew.-% bis 20 Gew.-% Einheiten von mit Methylmethacrylat copolymerisierbaren Monomeren und einem in der Matrix verteilten Anteil an Schlagzähmodifizierungsmitteln auf Basis von vernetzten Poly(meth)acrylaten.

Das Matrixpolymer besteht insbesondere aus 80 Gew.-%, bis 100 Gew.-%, vorzugsweise zu 90 Gew.-% bis 99,5 Gew.-%, aus radikalisch polymerisierten Methylmethacrylat-Einheiten und gegebenenfalls zu 0 Gew.-% bis 20 Gew.-%, bevorzugt zu 0,5 Gew.-% bis 12 Gew.-% aus weiteren radikalisch polymerisierbaren Comonomeren, z. B. C₁- bis C₄-Alkyl(meth)acrylaten, insbesondere Methylacrylat, Ethylacrylat oder Butylacrylat. Je höher das Molekulargewicht der Matrixpolymere ist, desto besser ist die Witterungsbeständigkeit der UV-Schutzfolie.
In einer besonderen Ausführungsform der Erfindung kennzeichnet sich die Folie dadurch, dass das Poly(meth)acrylat ein Gewichtsmittel des Molekulargewichts M_{w} von ≥ 80.000 g/mol aufweist, bestimmt mittels Gelpermeationschromatographie (GPC). Noch mehr bevorzugt verfügt das Poly(meth)acrylat über ein Gewichtsmittel des Molekulargewichts M_{w} von ≥ 120.000 g/mol, bestimmt ebenfalls mittels Gelpermeationschromatographie (GPC). Noch witterungsbeständigere Folien lassen sich im Rahmen der Erfindung dann erzielen, wenn das Poly(meth)acrylat über ein Gewichtsmittel des Molekulargewichts M_{w} von ≥ 140.000 g/mol verfügt, bestimmt mittels Gelpermeationschromatographie (GPC). Das mittlere Molekulargewicht M_{w} (Gewichtsmittel) der Matrix liegt generell im Bereich von 80.000 g/mol bis 200.000 g/mol (Bestimmung von M_{w} mittels Gelpermeationschromatographie unter Bezug auf Polymethylmethacrylat als Eichstandard, wie bei allen Mw Bestimmungen des Matrix-PMMAs) entsprechen. Besonders gute Bewitterungsstabilitäten werden allerdings von Folien erreicht, deren Matrixpolymerisat ein mittlere Molekulargewicht M_{w} (Gewichtsmittel) im Bereich von 80.000 g/mol bis 180.000 g/mol, vorzugsweise im Bereich von 108.000 g/mol bis 180.000 g/mol aufweist, noch mehr bevorzugt im Bereich von 122.000 g/mol bis 180.000 g/mol, bestimmt jeweils mittels GPC gegen PMMA Eichstandards. Die Bestimmung des Molekulargewichts M_{w} kann neben der GPC-Methode beispielsweise auch per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Bevorzugt ist ein Copolymer aus 85 Gew.-% bis 99,5 Gew.-% Methylmethacrylat und 0,5 Gew.-% bis 15 Gew.-% Methylacrylat, das gegebenenfalls einen optionalen Anteil an Butylacrylat von 0 -12 Gew.-% aufweist, wobei sich die Mengen auf 100 Gew.-% der polymerisierbaren Bestandteile beziehen. Besonders zweckmäßig sind Copolymere, die erhältlich sind durch Copolymerisation von 90 Gew.-% bis 99,5 Gew.-% Methylmethacrylat und 0,5 Gew.-% bis 10 Gew.-% Methylacrylat, das gegebenenfalls einen optionalen Anteil an Butylacrylat von 0 Gew.-% - 10 Gew.-% aufweist, wobei sich die Mengen auf 100 Gew.-% der polymerisierbaren Bestandteile beziehen. Noch mehr bevorzugt sind Copolymere, die erhältlich sind aus 92,5 Gew.-% bis 97,5 Gew.-% Methylmethacrylat und 2,5 Gew.-% bis 7,5 Gew.-% Methylacrylat, das gegebenenfalls einen optionalen Anteil an Butylacrylat von 0 Gew.-% - 7 Gew.-% aufweist, wobei sich die Mengen auf 100 Gew.-% der polymerisierbaren Bestandteile beziehen. Die Vicaterweichungstemperaturen VET (ISO 306-B50) können im Bereich von mindestens 90° C, bevorzugt von 95° C bis 112 °C liegen.

Im Extruder können das Schlagzähmodifizierungsmittel und Matrixpolymerisat zu schlagzähmodifizierten Polymethacrylat-Formmassen in der Schmelze vermischt werden. Das ausgetragene Material wird in der Regel zunächst zu Granulat geschnitten. Dieses kann mittels Extrusion oder Spritzguß zu Formkörpern, wie Platten, Folien oder Spritzgußteilen weiterverarbeitet werden.

### Das Schlagzähmodifizierungsmittel

Die Polymethacrylat-Matrix enthält ein Schlagzähmodifizierungsmittel, welches z. B. ein zwei- oder dreischalig aufgebautes Kern-Schale-Polymerisat sein kann, bevorzugt werden zweischalige Schlagzähmodifizierungsmittel eingesetzt.

Schlagzähmodifizierungsmittel für Polymethacrylat-Kunststoffe sind hinlänglich bekannt. Herstellung und Aufbau von schlagzähmodifizierten Polymethacrylat-Formmassen sind z. B. in EP-A 0 113 924, EP-A 0 522 351, EP-A 0 465 049 und EP-A 0 683 028 beschrieben.

In der Polymethacrylat-Matrix sind 1 Gew.-% bis 35 Gew.-%, bevorzugt 2 Gew.-% bis 20 Gew.-%, besonders bevorzugt 3 Gew.-% bis 15 Gew.-%, insbesondere 5 Gew.-% bis 12 Gew.-% eines Schlagzähmodifizierungsmittels, das eine Elastomerphase aus vernetzten Polymerisatteilchen ist, enthalten. Das Schlagzähmodifizierungsmittel wird in an sich bekannter Weise durch Perlpolymerisation oder durch Emulsionspolymerisation erhalten.

Im einfachsten Fall handelt es sich um mittels Perlpolymerisation erhältliche, vernetzte Teilchen mit einer mittleren Teilchengröße im Bereich von 10 nm bis 150 nm, bevorzugt 20 nm bis 100 nm, insbesondere 30 nm bis 90 nm. Diese bestehen in der Regel aus mindestens 40 Gew.-%, bevorzugt 50 Gew.-% bis 70 Gew.-% Methylmethacrylat, 20 Gew.-% bis 40 Gew.-%, bevorzugt 25 Gew.-% bis 35 Gew.-% Butylacrylat sowie 0,1 Gew.-% bis 2 Gew.-%, bevorzugt 0,5 Gew.-% bis 1 Gew.-% eines vernetzenden Monomeren, z. B. einem mehrfunktionellen (Meth)acrylat wie z. B. Allylmethacrylat und gegebenenfalls weiteren Monomeren wie z. B. 0 Gew.-% bis 10 Gew.-%, bevorzugt 0,5 Gew.-% bis 5 Gew.-% an C₁-C₄-Alkylmethacrylaten, wie Ethylacrylat oder Butylmethacrylat, bevorzugt Methylacrylat, oder anderen vinylisch polymerisierbaren Monomeren wie z. B. Styrol.

Bevorzugte Schlagzähmodifizierungsmittel sind Polymerisatteilchen, die einen zwei- oder einen dreischichtigen Kern-Schale-Aufbau aufweisen können und durch Emulsionspolymerisation erhalten werden (s. z. B. EP-A 0 113 924, EP-A 0 522 351, EP-A 0 465 049 und EP-A 0 683 028). Geeignete Teilchengrößen dieser Emulsionspolymerisate müssen jedoch für die Zwecke der Erfindung im Bereich von 10 nm bis 150 nm, bevorzugt 20 nm bis 120 nm, besonders bevorzugt 50 nm bis 100 nm.

Ein dreischichtiger bzw. dreiphasiger Aufbau mit einem Kern und zwei Schalen kann wie folgt beschaffen sein. Eine innerste (harte) Schale kann z. B im wesentlichen aus Methylmethacrylat, geringen Anteilen von Comonomeren, wie z. B. Ethylacrylat und einem Vernetzeranteil, z. B. Allylmethacrylat, bestehen. Die mittlere (weiche) Schale kann z. B. aus Butylacrylat und gegebenenfalls Styrol aufgebaut sein, während die äußerste (harte) Schale im wesentlichen meist dem Matrixpolymerisat entspricht, wodurch die Verträglichkeit und gute Anbindung an die Matrix bewirkt wird. Der Polybutylacrylat-Anteil am Schlagzähmodifizierungsmittel ist entscheidend für die schlagzähe Wirkung und liegt bevorzugt im Bereich von 20 Gew.-% bis 40 Gew.-%, besonders bevorzugt im Bereich von 25 Gew.-% bis 35 Gew.-%.

Zweiphasiger Schlagzähmodifier gemäß EP 0 528 196 A1

Bevorzugt, insbesondere zur Folienherstellung, jedoch nicht auf diese beschränkt, wird ein, im Prinzip aus EP 0 528 196 A1 bekanntes System verwendet, das ein zweiphasiges, schlagzähmodifiziertes Polymerisat ist aus:
a1) 10 Gew.-% bis 95 Gew.-% einer zusammenhängenden Hartphase mit einer Glasübergangstemperatur T_{mg} über 70 °C, aufgebaut aus
   a11) 80 Gew.-% bis 100 Gew.-% (bezogen auf a1) Methylmethacrylat und
   a12) 0 Gew.-% bis 20 Gew.-% eines oder mehrerer weiterer ethylenisch ungesättigter, radikalisch polymerisierbarer Monomeren, und
a2) 90 Gew.-% bis 5 Gew.-% einer in der Hartphase verteilten Zähphase mit einer Glasübergangstemperatur *T*_{mg} unter -10 °C, aufgebaut aus
   a21) 50 Gew.-% bis 99,5 Gew.-% eines C₁-C₁₀-Alkylacrylats (bezogen auf a2)
   a22) 0,5 Gew.-% bis 5 Gew.-% eines vernetzenden Monomeren mit zwei oder mehr ethylenisch ungesättigten, radikalisch polymerisierbaren Resten, und
   a23) gegebenenfalls weiteren ethylenisch ungesättigten, radikalisch polymerisierbaren Monomeren,
wobei wenigstens 15 Gew.-% der Hartphase a1) mit der Zähphase a2) kovalent verknüpft sind.

Das zweiphasige Schlagzähmodifizierungsmittel kann durch eine zweistufige Emulsionspolymerisation in Wasser erzeugt werden, wie z. B. in DE-A 38 42 796 beschrieben. In der ersten Stufe wird die Zähphase a2) erzeugt, die zu mindestens 50 Gew.-%, vorzugsweise zu mehr als 80 Gew.-%, aus niederen Alkylacrylaten aufgebaut ist, woraus sich eine Glasübergangstemperatur *T*_{mg} dieser Phase von unter -10 °C ergibt. Als vernetzende Monomere a22) werden (Meth)acrylester von Diolen, wie beispielsweise Ethylenglykoldimethacrylat oder 1,4-Butandioldimethacrylat, aromatische Verbindungen mit zwei Vinyl- oder Allylgruppen, wie beispielsweise Divinylbenzol, oder andere Vernetzer mit zwei ethylenisch ungesättigten, radikalisch polymerisierbaren Resten, wie z. B. Allylmethacrylat als Pfropfvernetzer, eingesetzt. Als Vernetzer mit drei oder mehr ungesättigten, radikalisch polymerisierbaren Gruppen, wie Allylgruppen oder (Meth)acrylgruppen, seien beispielhaft Triallylcyanurat, Trimethylolpropantriacrylat und -trimethacrylat sowie Pentaerythrit-tetraacrylat und - tetramethacrylat genannt. Weitere Beispiele sind hierzu in US 4,513,118 angegeben.

Die unter a23) genannten ethylenisch ungesättigten, radikalisch polymerisierbaren Monomeren können beispielsweise Acryl- bzw. Methacrylsäure sowie deren Alkylester mit 1 - 20 Kohlenstoffatomen, sofern noch nicht genannt, sein, wobei der Alkylrest linear, verzweigt oder cyclisch sein kann. Des Weiteren kann a23) weitere radikalisch polymerisierbare aliphatische Comonomere, die mit den Alkylacrylaten a21) copolymerisierbar sind, umfassen. Jedoch sollen nennenswerte Anteile an aromatischen Comonomeren, wie Styrol, alpha-Methylstyrol oder Vinyltoluol ausgeschlossen bleiben, da sie - vor allem bei Bewitterung - zu unerwünschten Eigenschaften der Formmasse führen.

Bei der Erzeugung der Zähphase in der ersten Stufe muß die Einstellung der Teilchengröße und deren Uneinheitlichkeit genau beachtet werden. Dabei hängt die Teilchengröße der Zähphase im wesentlichen von der Konzentration des Emulgators ab. Vorteilhafterweise kann die Teilchengröße durch den Einsatz eines Saatlatex gesteuert werden. Teilchen mit einer mittleren Teilchengröße (Gewichtsmittel) unter 130 nm, vorzugsweise unter 70 nm, und mit einer Uneinheitlichkeit U₈₀ der Teilchengröße unter 0,5, (U₈₀ wird aus einer integralen Betrachtung der Teilchengrößenverteilung, die per Ultrazentrifuge bestimmt wird, ermittelt. Es gilt: U₈₀ = [(r₉₀ - r₁₀) / r_{50]} - 1, wobei r₁₀, r₅₀, r₉₀ = mittlerer integraler Teilchenradius für den gilt 10,50,90 % der Teilchenradien liegen unter und 90,50,10 % der Teilchenradien liegen über diesem Wert) vorzugsweise unter 0,2, werden mit Emulgatorkonzentrationen von 0,15 bis 1,0 Gew.-%, bezogen auf die Wasserphase, erreicht. Dies gilt vor allem für anionische Emulgatoren, wie beispielsweise die besonders bevorzugten alkoxylierten und sulfatierten Paraffine. Als Polymerisationsinitiatoren werden z. B. 0,01 Gew.-% bis 0,5 Gew.-% Alkali- oder Ammoniumperoxodisulfat, bezogen auf die Wasserphase eingesetzt und die Polymerisation wird bei Temperaturen von 20 bis 100 °C ausgelöst. Bevorzugt werden Redox-Systeme, beispielsweise eine Kombination aus 0,01 Gew.-% bis 0,05 Gew.-% organischem Hydroperoxid und 0,05 bis 0,15 Gew.-% Natriumhydroxymethylsulfinat, bei Temperaturen von 20 bis 80 °C verwendet.

Die mit der Zähphase a2) zumindest zu 15 Gew.-% kovalent verbundene Hartphase a1) weist eine Glasübergangstemperatur von wenigstens 70 °C auf und kann ausschließlich aus Methylmethacrylat aufgebaut sein. Als Comonomere a12) können bis zu 20 Gew.-% eines oder mehrerer weiterer ethylenisch ungesättigter, radikalisch polymerisierbarer Monomerer in der Hartphase enthalten sein, wobei Alkyl(meth)acrylate, vorzugsweise Alkylacrylate mit 1 bis 4 Kohlenstoffatomen, in solchen Mengen eingesetzt werden, daß die oben genannte Glasübergangstemperatur nicht unterschritten wird.

Die Polymerisation der Hartphase a1) verläuft in einer zweiten Stufe ebenfalls in Emulsion unter Verwendung der üblichen Hilfsmittel, wie sie beispielsweise auch zur Polymerisation der Zähphase a2) verwandt werden.

### PVDF Polymere

Bei den im Rahmen der Erfindung zum Einsatz kommenden PVDF Polymeren handelt es sich um Polyvinylidenfluoride, das sind in der Regel transparente, teilkristalline, thermoplastische Fluorkunststoffe. Grundbaustein für das Polyvinylidenfluorid ist Vinylidenfluorid, welches in hochreinem Wasser unter kontrollierten Druck- und Temperaturbedingungen mittels eines speziellen Katalysators zu Polyvinylidenfluorid umgesetzt (polymerisiert) wird. Das Vinylidenfluorid wiederum ist beispielsweise aus den Grundmaterialien Fluorwasserstoff und Methylchloroform, über die Zwischenstufe Chlordifluorethan zugänglich. Im Rahmen der Erfindung sind prinzipiell alle am Markt befindlichen Typen von PVDF mit sehr gutem Erfolg einsetzbar. Hierzu gehören unter anderem Kynar^{®} - Typen des Herstellers Arkema, Dyneon^{®} - Typen des Herstellers Dyneon sowie Solef^{®} - Typen des Herstellers Solvay.

Die Kombination von PMMA/PVDF in einer erfindungsgemäßen Folie im erfindungsgemäßen Mengenbereich Poly(meth)acrylat und Polyvinylidenfluorid in einem Verhältnis von 1 : 0,01 bis 1 : 1 (w/w) ermöglicht in Verbindung mit dem erfindungsgemäßen UV-Stabilisator und UV-Absorber - Paket eine äußerst leistungsfähige Bewitterungsschutzfolie.

In einer bevorzugten Variante ist die erfindungsgemäße Folie einschichtig. Diese kostengünstige Variante zeichnet sich durch einen Blend von PMMA und PVDF in einer einzigen Schicht aus.

Für den Fall der Ausführung als einschichtige Bewitterungsschutzfolie sind solche Ausführungsformen von ganz besonderem Interesse. Noch mehr bevorzugt sind solche Modifikationen, bei denen die Folie eine Mischung von Poly(meth)acrylat und Polyvinylidenfluorid im Verhältnis von 1 : 0,15 bis 1 : 0,40 (w/w) umfaßt, bevorzugt ist das Verhältnis von 1 : 0,15 bis 1 : 0,30 (w/w).

In einer weiteren bevorzugten Variante ist die erfindungsgemäße Folie mehrschichtig. Das bedeutet, dass sie mehr als eine Lage aufweist, wobei die mindestens zwei Lagen in der Zusammensetzung der individuellen Lage voneinander abweichen. So kann eine Schicht PMMA aufweisen, eine andere Schicht PVDF. Es sind auch alle denkbaren Kombinationen zur Erfindung gehörig, beispielsweise eine Schicht kann einen Blend aus PMMA/PVDF aufweisen, während eine zweite Schicht des Verbunds nur PMMA oder nur PVDF enthalten kann. Daneben können die Eigenschaften weitergehend durch Hinzufügung weiterer Schichten aus verschiedenen Materialien angepaßt werden.

Für den Fall der Ausführung als mehrschichtige Bewitterungsschutzfolie sind solche Ausführungsformen von ganz besonderem Interesse, die sich dadurch auszeichnen, dass die Folie wenigstens zwei Lagen umfaßt, von denen wenigstens eine aus Poly(meth)acrylat besteht und wenigstens eine andere aus Polyvinylidenfluorid. Noch mehr bevorzugt sind solche Folien, bei denen die Folie aus zwei Lagen besteht, von denen eine Poly(methyl)methacrylatschicht und die andere eine Polyvinylidenfluoridschicht ist.

Die genannten Folienverbunde aus mehr als einer Lage sind nach an sich bekannten Folienbildungsverfahren erhältlich. In einer bevorzugten Ausführungsform sind die Verbunde durch Coextrusion erhältlich. Es sind aber auch Kaschierverfahren denkbar, beispielsweise mit oder ohne den Einsatz von Haftvermittlern.

Bevorzugt sind insbesondere solche Folienverbunde (mehrschichtige Folien) bei denen die PVDF- Folie als Haftvermittler selbst wirkt, beispielsweise zu den zu beschichtenden Substraten aus z.B. PVC.

Es sind daneben auch solche Folienverbunde bevorzugt, bei denen zur Steigerung der Haftung untereinander beide Schichten einen Blend aufweisen. So kann eine äußere PMMA-Schicht einen untergeordneten Anteil an PVDF aufweisen, um eine gute Haftung zu einer reinen PVDF-Schicht zu gewährleisten. Die PVDF-Schicht wiederum dient zum direkten Kontakt mit einer vorzugsweise PVC-haltigen Substratschicht.

### Das Stabilisatorpaket (Lichtschutzmittel)

Lichtschutzmittel sind hinlänglich bekannt und werden beispielsweise in Hans Zweifel, Plastics Additives Handbook, Hanser Verlag, 5. Ausgabe, 2001, S. 141 ff ausführlich beschrieben. Unter Lichtschutzmitteln sollen UV-Absorber, UV-Stabilisatoren und Radikalfänger verstanden werden.

UV-Absorber können beispielsweise aus der Gruppe der substituierten Benzophenone, Salicylsäureester, Zimtsäureester, Oxalanilide, Benzoxazinone, Hydroxyphenylbenztriazole, Triazine oder Benzyliden-Malonat stammen.

Den bekanntesten Vertreter der UV-Stabilisatoren / Radikalfänger stellt die Gruppe der sterisch gehinderten Amine (Hindered Amine Light Stabilizer, HALS) dar.

Das erfindungsgemäße Stabilisatorpaket besteht aus folgenden Komponenten:
- Komponente A: einem UV-Absorber vom Benztriazol-Typ,
- Komponente B: einem UV-Absorber vom Triazin-Typ
- Komponente C: einem UV-Stabilisator (HALS-Verbindung)

Die einzelnen Komponenten können als Einzelsubstanz oder in Mischungen eingesetzt werden.

### Einpolymerisierbare UV-Absorber

Typische Monomere dieser Art enthalten Gruppen mit hoher Absorption im Wellenlängenbereich von 290 bis 370 nm. Bevorzugt sind Monomere, deren UV-Absorption in Form einer 5 mm dicken Schicht einer Lösung in Chloroform (Spektroskopie-Qualität) bei einer Konzentration von 0,002 Gew.-% wenigstens 10 % beträgt. Geeignet sind z.B. Derivate des 2-Hydroxybenzophenons, des Hydroxyacetophenons, des Cyano-β,β-diphenyls, der Hydroxybenzoesäureester, des Oxanilids, der para-Aminobenzoesäureester oder der 6,8-Dialkyl-4-oxo-5-chromanylverbindung. Als ethylenisch ungesättigte, radikalisch polymerisierbare Gruppen enthalten diese Monomeren vorzugsweise Acryl-, Methacryl-, Allyl- oder Vinylgruppen.

Beispiele geeigneter Monomere sind: 2-(Cyano-β,β-diphenylacryloyloxy)ethyl-1-methacrylat, 2-(2'-Hydroxy-3'-methacrylamidomethyl-5'-octylphenyl)-benztriazol, 2-Hydroxy-4-(2-hydroxy-3-methacrylolyloxy)propoxybenzophenon, 2-(alpha-Cyano-β,β-diphenylacryloyloxy)ethyl-2-methacrylamid, 2-Hydroxy-4-methacryloyloxybenzophenon, 2-Hydroxy-4-acryloyloxyethyloxybenzophenon, N-(4-Methacryloylphenol)-N'-(2-ethylphenyl)oxalsäurediamid, 4-Ethyl-alphacyano-β-phenylzimtsäure-vinylester, 2-(2-Hydroxy-5-vinylphenyl)-2-benztriazol.

Der Anteil des UV-Absorbierenden Monomeren an dem Polymethylmethacrylat kann vorteilhaft so hoch gewählt werden, dass die Folienschicht wenigstens 98 % der einfallenden UV-Strahlung einer Wellenlänge von 290 bis 370 nm absorbiert. Die dafür erforderliche Konzentration hängt von der Schichtdicke und der Wirksamkeit des Monomeren ab. Sie liegt in der Regel zwischen 0,1 Gew.-%, und 2 Gew.-%, bezogen auf das Gewicht der Monomeren, die zur Herstellung der Polymethyl(meth)acrylate eingesetzt werden.

Einpolymerisierbare UV-Absorber haben den Nachteil, nicht zu migrieren. Im Lauf der Bewitterung verarmt die obere, dem UV-Licht und dem Wetter ausgesetzte Schicht zunehmend an UV-Absorber, durch die Immobilisierung des Moleküls als Bestandteil des Polymers kann aber kein unverbrauchter UV-Absorber nachdiffundieren, die Schicht ist den Angriffen der UV-Strahlung und des Wetters schutzlos ausgeliefert.

Die Verwendung nicht-einpolymerisierter UV-Absorber ermöglicht hingegen das Nachmigrieren des UV-Absorbers an die Oberfläche. Gleichzeitig möchte man aber vermeiden, dass der migrationsfähige UV-Absorber während der Verarbeitung wie z.B. im Extrusionsprozess aus dem Kunststoffformkörper entweicht. Deshalb ist hier der Einsatz von schwerflüchtigen Lichtschutzmitteln bevorzugt. Die Flüchtigkeit kann über den Gewichtsverlust in der TGA gemäß DIN ISO 11358 bestimmt werden. Bevorzugt sind hierbei Lichtschutzmittel, die bei dieser Messung an der reinen Substanz und einer Aufheizrate von 20 °C/min in Luft einen Gewichtsverlust von 2 % bei einer Temperatur von größer als 240 °C, bevorzugt größer als 270 °C und besonders bevorzugt von größer als 300 °C aufweisen.

### Komponente A: UV-Absorber vom Benztriazol-Typ

Als UV-Absorber vom Benztriazol-Typ können beispielsweise 2-(2-Hydroxy-5-methylphenyl)-benztriazol, 2-[2-Hydroxy-3,5-di-(alpha,alpha-dimethyl-benzyl)-phenyl]-benztriazol, 2-(2-Hydroxy-3,5-di-t-butylphenyl)-benztriazol, 2-(2-Hydroxy-3-5-butyl-5-methylphenyl)-5-chlorbenztriazol, 2-(2-Hydroxy-3,5-di-t-butylphenyl)-5-chlorbenztriazol, 2-(2-Hydroxy-3,5-di-t-amylphenyl)-benztriazol, 2-(2-Hydroxy-5-t-butylphenyl)-benztriazol, 2-(2-Hydroxy-3-sek-butyl-5-t-butylphenyl)-benztriazol und 2-(2-Hydroxy-5-t-octylphenyl)-benztriazol, Phenol, 2,2'-methylenbis[6-(2H-benztriazol-2-yl)-4-(1,1,3,3,-tetramethylbutyl)] verwendet werden.

Die UV-Absorber vom Benztriazol-Typ werden in Mengen zwischen 0,1 Gew.-% und 10 Gew.-% eingesetzt, bevorzugt in Mengen zwischen 0,2 Gew.-% und 6 Gew.-% und ganz besonders bevorzugt in Mengen zwischen 0,5 Gew.-% und 4 Gew.-%, bezogen auf das Gewicht der Monomeren, die zur Herstellung der Polymethyl(meth)acrylate eingesetzt werden. Es können auch Mischungen unterschiedlicher UV-Absorber vom Benztriazol-Typ eingesetzt werden.

### Komponente B: UV-Absorber vom Triazin-Typ

Ferner können in der Mischung auch Triazine, wie beispielsweise das 2-(4,6-Diphenyl-1,3,5-triazin-2-yl)-5-hexyloxy-phenol, als UV-Stabilisatoren eingesetzt werden.

Die Triazine werden in Mengen zwischen 0,0 Gew.-% und 5 Gew.-% eingesetzt, bevorzugt in Mengen zwischen 0,2 Gew.-% und 3 Gew.-% und ganz besonders bevorzugt in Mengen zwischen 0,5 Gew.-% und 2 Gew.-%, bezogen auf das Gewicht der Monomeren, die zur Herstellung der Polymethyl(meth)acrylate eingesetzt werden. Es können auch Mischungen unterschiedlicher Triazine eingesetzt werden.

### Komponente C: UV-Stabilisatoren

Als Beispiel für Radikalfänger/UV-Stabilisatoren seien hier sterisch gehinderte Amine, die unter dem Namen HALS (Hindered Amine Light Stabilizer) bekannt sind genannt. Sie können für die Inhibierung von Alterungsvorgängen in Lacken und Kunststoffen, vor allem in Polyolefinkunststoffen, eingesetzt werden (Kunststoffe, 74 (1984) 10, S. 620 bis 623; Farbe + Lack, 96 Jahrgang, 9/1990, S. 689 bis 693). Für die Stabilisierungswirkung der HALS-Verbindungen ist die darin enthaltene Tetramethylpiperidingruppe verantwortlich. Diese Verbindungsklasse kann am Piperidinstickstoff sowohl unsubstituiert als auch mit Alkyl- oder Acylgruppen substituiert sein. Die sterisch gehinderten Amine absorbieren im UV-Bereich nicht. Sie fangen gebildete Radikale ab, was die UV-Absorber wiederum nicht können. Beispiele für stabilisierend wirkende HALS-Verbindungen, die auch als Gemische eingesetzt werden können sind: Bis-(2,2,6,6-tetramethyl-4-piperidyl)-sebacat, 8-Acetyl-3-dodecyl-7,7,9,9-tetramethyl-1,3-8-triazaspiro(4,5)-decan-2,5-dion, Bis-(2,2,6,6-tetramethyl-4-piperidyl)-succinat, Poly-(N-β-hydroxyethyl-2,2,6,6-tetramethyl-4-hydroxypiperidin-bernsteinsäureester) oder Bis-(N-methyl-2,2,6,6-tetramethyl-4-piperidyl)-sebacat.

Die HALS-Verbindungen werden in Mengen zwischen 0,0 Gew.-% und 5 Gew.-% eingesetzt, bevorzugt in Mengen zwischen 0,1 Gew.-% und 3 Gew.-% und ganz besonders bevorzugt in Mengen zwischen 0,2 Gew.-% und 2 Gew.-%, bezogen auf das Gewicht der Monomeren, die zur Herstellung der Polymethyl(meth)acrylate eingesetzt werden. Es können auch Mischungen unterschiedlicher HALS-Verbindungen eingesetzt werden.

Als weitere Costabilisatoren können ferner die bereits beschriebenen HALS-Verbindungen, Disulfite, wie beispielsweise Natriumdisulfit verwendet werden, ferner sterisch gehinderte Phenole und Phosphite.

### Weitere Additive

Weitere Additive, die dem Kunststoffformkörper zugesetzt werden können, sind Mattierungsmittel, Pigmente, Farbstoffe oder Haftvermittler.

### Herstellung der Folien

Die erfindungsgemäße Folie kann je nach Anwendungszweck in jeder beliebigen Dicke hergestellt werden. Überraschend ist dabei in jedem Falle die hohe Transparenz von > 91,5 %, gepaart mit einer außerordentlichen Witterungsstabilität sowie dem extremen Bewitterungsschutz für das Substrat. Bevorzugt wird im Rahmen der Erfindung jedoch ein dünnerer Kunststoffformkörper, nämlich ein Film oder eine Folie, die gekennzeichnet ist durch eine Dicke im Bereich von 10 bis 200 µm, vorzugsweise im Bereich von 40 bis 120 µm, besonders bevorzugt im Bereich von 50 bis 90 µm.

Die Herstellung der ein- oder mehrschichtigen Folie erfolgt durch an sich bekannte Methoden, wie beispielsweise der Extrusion durch eine Breitschlitzdüse wie bei der Flachfolienextrusion, der Blasfolienextrusion oder durch Lösungsgießen. Mehrschichtige Kunststofffolien können beispielsweise auch durch Coextrusion, Kaschierung, durch Extrusionsbeschichtung oder durch Lamination hergestellt werden.

Eine besondere Herstellvariante bezieht sich auf eine transparenten Folie aus Kunststoff mit erhöhtem Witterungsschutz und hohem UV-Schutz, bei welchem Verfahren man
aus einer Zusammensetzung umfassend
a) Poly(meth)acrylat und Polyvinylidenfluorid in einem Verhältnis von 1 : 0,01 bis 1 : 1 (w/w);
   und
b) eine Mischung aus UV-Stabilisatoren und UV-Absorbern eine Folie im Chill-Roll Verfahren formt.

Eine weitere besondere Verfahrensabwandlung bezieht sich auf die Herstellung einer transparenten mehrlagigen Folie aus Kunststoff mit erhöhtem Witterungsschutz und hohem UV-Schutz,
bei welchem Verfahren man
eine Poly(meth)acrylat-Folie und eine Polyvinylidenfluorid-Folie miteinander kaschiert oder coextrudiert, wobei eine oder beide der Folien eine Mischung aus UV-Stabilisatoren und UV-Absorbern enthalten, oder wobei eine der Folien wenigstens einen UV-Stabilisator und die andere der Folien wenigstens einen UV-Absorber enthält, und wobei die kaschierte oder coextrudierte Mehrlagenfolie das Poly(meth)acrylat und Polyvinylidenfluorid in einem Verhältnis von 1 : 0,01 bis 1 : 1 (w/w) aufweist.

Die erfindungsgemäßen Folien finden ein breites Anwendungsspektrum. Eine bevorzugte Verwendung der Folien ist das Beschichten von Kunststoffformkörpern. Hierbei werden besonders zweckmäßig Kunststoffformkörper, die PVC aufweisen, oder Kunststoffformkörper, die aus Polyvinylchlorid bestehen, beschichtet. Zweckmäßig handelt es sich zum Beispiel beim geschützten Substrat um ein Fensterprofil aus Aluminium, Holz, Kunststoff oder einem Verbundwerkstoff, welches bereits eine Dekorfolie, vorzugsweise aus PVC, trägt. Diese wird dann mit der erfindungsgemäßen Folie vor Bewitterung geschützt.

Eine weitere bevorzugte Verwendung der erfindungsgemäßen Folie besteht in der Gestaltung einer hochwertigen sowie dauerhaften Oberflächenvergütung von Substratwerkstoffen.

In jedem Fall gestaltet sich das Aufbringen der erfindungsgemäßen Folie auf das Substrat relativ einfach. Bevorzugt erfolgt das das Aufbringen der Folie auf den zu schützenden Werkstoff mittels Coextrusion. Außerdem bevorzugt ist das Aufbringen der Folie auf den zu schützenden Werkstoff mittels Folienlamination. Daneben ist eine Verwendung bevorzugt, die dadurch gekennzeichnet ist, dass das Aufbringen der Folie auf den zu schützenden Werkstoff mittels Extrusionsbeschichtung erfolgt.

### Beispiele

### Zusammensetzung der Beispiele:

### Beispiel 1 (nicht erfindungsgemäß):

Eingesetzt wird eine PMMA-Folie mit einer Dicke von 56 µm, bestehend aus
a) 89,8 Masse-% eines Polymeren aus einem z**weiphasigen Schlagzähmodifier gemäß** EP 0 528 196 mit einer Bruttozusammensetzung von

| | |
|---|---|
| 59,9 Masse-% | MMA |
| 37,1 Masse-% | Butylacrylat |
| 0,36 Masse-% | Ethylacrylat |
| 0,66 Masse-% | Allylmethacrylat |
| 1,95 Masse-% | 3-(2-Benztriazololyl) 2-hydroxy-5-tert.-octylbenzylmethacrylat, ein einpolymerisierbarer UV-Absorber. |
| 0,53 Masse-% | Dodecylmercaptan, bezogen auf die vorstehenden Monomere, |

b) 10 Masse-% PLEXIGLAS^{®} 7H, erhältlich bei der Röhm GmbH,
c)

| | |
|---|---|
| 0,2 Masse-% | Tinuvin 360 (UV-Absorber auf Basis Benztriazol der Fa. Ciba SC) z |

und diese Mischung wird mittels üblicher Verfahren zu einer Folie extrudiert.

Die Folie wird dann auf eine PVC-Dekorfolie (braunes Holzdekor) laminiert, anschließend auf einen Kunststoffträger aufgebracht und getestet.

### Zusammensetzung der weiteren Beispiele:

### Beispiel 2:

Beispiel 1, abzüglich 1,95 Masse-% 3-(2-Benztriazololyl) 2-hydroxy-5-tert.-octylbenzylmethacrylat+ 2,3 Masse-%, bezogen auf die Folie nach Beispiel 1, Tinuvin^{®} 360 + 0,4 Masse-% Chimassorb 119 (HALS der Fa. Ciba SC). Die Monomermengen von Beispiel 1 sind entsprechend anzupassen.

### Beispiel 3:

Beispiel 1, abzüglich 1,95 Masse-% 3-(2-Benztriazololyl) 2-hydroxy-5-tert.-octylbenzylmethacrylat + 0,75 Masse-% CGX UVA 006, bezogen auf die Folie nach Beispiel 1, + 0,4 Masse-% Chimassorb 119 + 0,8 Masse-% Tinuvin^{®} 360. Die Monomermengen von Beispiel 1 sind entsprechend anzupassen.

### Beispiel 4:

Beispiel 1, abzüglich 1,95 Masse-% 3-(2-Benztriazololyl) 2-hydroxy-5-tert.-octylbenzylmethacrylat + 0,6 Masse-% CGX UVA 006, bezogen auf die Folie nach Beispiel 1, + 0,4 Masse-% Chimassorb 119 + 1,1 Masse-% Tinuvin 360. Die Monomermengen von Beispiel 1 sind entsprechend anzupassen.

### Vergleichsbeispiel 1:

### Kommerziell erhältliche Folie, Hersteller: Cova

### Beispiel 5 (nicht erfindungsgemäß):

Folie analog Beispiel 1, wobei die Folie auf eine rote PVC-Dekorfolie laminiert, anschließend auf einen Kunststoffträger aufgebracht und getestet wird.

### Beispiel 6:

Folie analog Beispiel 3, wobei die Folie auf eine rote PVC-Dekorfolie laminiert, anschließend auf einen Kunststoffträger aufgebracht und getestet wird.

### Beispiel 7:

Folie analog Beispiel 5, wobei die Folie auf eine rote PVC-Dekorfolie laminiert, anschließend auf einen Kunststoffträger aufgebracht und getestet wird.

Die hergestellten Folien wurden im Xenotest nach ISO 4892-2 bewittert. Die Bestrahlungsstärke betrug 180 Watt/m², zwischen 300 und 400 nm Wellenlänge.

### Vergleichsbeispiel 2:

Formmassenname: Plex 8943-F (ex Produktionsanlage, erhältlich bei der Röhm GmbH)
Reglergehalt (Dodecylmercaptan): 0,79 Gew.-%
Butylacrylatanteil: 8 Gew.-%

### Ergebnis:

Nach 4000h Bewitterung im Alpha High Energy Schnellbewitterungsgerät der Fa. Atlas wurden mittels optischer Bewertung der Muster durch eine Expertenrunde folgende Ergebnisse hinsichtlich Schutzwirkung (z.B. Farbänderung) für das darunter liegende Substrat (Holzdekor) ermittelt:

Die Formmasse aus Beispiel 11 weist eine vergleichbare Schutzwirkung zur Benchmark (Identisch hergestelltes Muster mit PMMA-Schutzfolie des Wettbewerbers Kaneka) auf.

| **Beispiel** | **Farbänderung (visuelle Beurteilung nach 4.000 h)** | **Mattgrad (visuelle Beurteilung nach 4.000 h)** | **Farbänderung (visuelle Beurteilung nach 5.333 h)** | **Mattgrad (visuelle Beurteilung nach 5.333 h)** |
|---|---|---|---|---|
| **1:** | **-** | **-** | **--** | -**-** |
| **2:** | **O** | **++** | **O** | **+** |
| **3:** | **+** | **++** | **+** | **++** |
| **4:** | **+** | **++** | **+** | **+ bis ++** |
| **VB1:** | **-** | **O** | **--** | **--** |
| **5:** | **-** | **-** | **--** | **--** |
| **6:** | **O** | **++** | **O** | **+** |
| **7:** | **++** | **++** | **++** | **++** |

| | | | | |
|---|---|---|---|---|
| ++ = keine Veränderung sichtbar + = nur sehr leichte Veränderung sichtbar O = nur leichte Veränderung sichtbar - = deutliche Veränderung sichtbar - - = sehr deutliche Veränderung | | | | |

## Patentansprüche

1. Transparente Folie aus Kunststoff mit hohem UV- und Witterungsschutz, wobei die Folie
a) Poly(meth)acrylat und Polyvinylidenfluorid in einem Verhältnis von 1 : 0,01 bis 1 : 1 (w/w);
und
b) eine Mischung aus UV-Stabilisatoren und UV-Absorbern umfasst.

2. Folie nach Anspruch 1, **dadurch gekennzeichnet, dass** die Folie einschichtig ist und die Folie eine Mischung von Poly(meth)acrylat und Polyvinylidenfluorid im Verhältnis von 1 : 0,1 bis 1 : 0,5 (w/w) umfasst.

3. Folie nach Anspruch 1, **dadurch gekennzeichnet, dass** die Folie wenigstens zwei Lagen umfasst, von denen wenigstens eine aus Poly(meth)acrylat besteht und wenigstens eine andere aus Polyvinylidenfluorid.

4. Folie nach Anspruch 3, **dadurch gekennzeichnet, dass** die Folie aus zwei Lagen besteht, von denen eine Poly(methyl)methacrylatschicht und die andere eine Polyvinylidenfluoridschicht ist.

5. Folie nach einem der Ansprüche 3 bis 4, **dadurch gekennzeichnet, dass** sie coextrudiert ist.

6. Folie nach einem der vorhergehenden Ansprüche, **dadurch gekennzeichnet, dass** sie eine Transparenz > 91,5 % besitzt.

7. Folie nach einem der vorhergehenden Ansprüche, **dadurch gekennzeichnet, dass** das Poly(meth)acrylat a) ein Gewichtsmittel des Molekulargewichts Mw von ≥ 80.000 g/mol aufweist, bestimmt mittels Gelpermeationschromatographie gegen PMMA-Eichstandards.

8. Folie nach Anspruch 7, **dadurch gekennzeichnet, dass** das Poly(meth)acrylat a) ein Gewichtsmittel des Molekulargewichts M_{w} im Bereich von 80.000 g/mol bis 180.000 g/mol-aufweist

9. Folie nach einem der vorhergehenden Ansprüche,
**dadurch gekennzeichnet, dass**
das Poly(meth)acrylat a) erhältlich ist durch Polymerisation einer Zusammensetzung aufweisend als polymerisierbare Bestandteile:
a. > 50 Gew.-% bis 99,9 Gew.-% Methylmethacrylat,
b. 0,1 Gew.-% bis < 50 Gew.-% eines Acrylats mit einem Esterrest stammend von einem C1 - C4 Alkohol, c. 0 Gew.-% bis 10 Gew.-% mit den Monomeren a. und b.
copolymerisierbare Monomere.

10. Folie nach einem der vorhergehenden Ansprüche,
**dadurch gekennzeichnet, dass**
das Poly(meth)acrylat a) erhältlich ist durch Polymerisation einer Zusammensetzung aufweisend als polymerisierbare Bestandteile:
a. 88 Gew.-% bis 92 Gew.-% Methylmethacrylat,
b. 8 Gew.-% bis12 Gew.-% eines Acrylats mit einem Esterrest stammend von einem C1 - C4 Alkohol,
c. 0 Gew.-% bis 10 Gew.-% mit den Monomeren a. und b.
copolymerisierbare Monomere.

11. Folie nach einem der vorhergehenden Ansprüche,
**dadurch gekennzeichnet, dass**
das Poly(meth)acrylat a) schlagzäh mit einem Schlagzähmodifizierer ausgerüstet ist, dass
die Menge an Schlagzähmodifizierer zwischen 1 Gew.-% und 50 Gew.-%, bezogen auf die Summe aus Poly(meth)acrylat und Schlagzähmodifizierer, beträgt, und dass
das Poly(meth)acrylat a) und der Schlagzähmodifizierer aus einem Kern-Schale-Polymerisat stammen, wobei die Schale in der Folie eine Matrix aus Polymer ausbildet.

12. Folie nach einem der vorstehenden Ansprüche,
**gekennzeichnet durch** eine Dicke im Bereich von 10 bis 200 µm.

13. Folie nach Anspruch 12,
**gekennzeichnet durch** eine Dicke im Bereich von 50 bis 90 µm.

14. Verfahren zur Herstellung einer transparenten Folie aus Kunststoff mit hohem UV- und Witterungsschutz,
bei dem man
aus einer Zusammensetzung umfassend
a) Poly(meth)acrylat und Polyvinylidenfluorid in einem Verhältnis von 1 : 0,01 bis 1 : 1 (w/w);
und
b) eine Mischung aus UV-Stabilisatoren und UV-Absorbern
eine Folie formt.

15. Verfahren gemäß Anspruch 14, **dadurch gekennzeichnet, dass** die Folie im Chill-Roll Verfahren geformt wird.

16. Verfahren gemäß Anspruch 14, **dadurch gekennzeichnet, dass** es sich bei der Folie um eine mehrlagige Folie handelt, und dass man eine Poly(meth)acrylat-Folie und eine Polyvinylidenfluorid-Folie miteinander kaschiert oder coextrudiert, wobei eine oder beide der Folien eine Mischung aus UV-Stabilisatoren und UV-Absorbern enthalten, oder wobei eine der Folien wenigstens einen UV-Stabilisator und die andere der Folien wenigstens einen UV-Absorber enthält, und wobei die kaschierte oder coextrudierte Mehrlagenfolie das Poly(meth)acrylat und Polyvinylidenfluorid in einem Verhältnis von 1 : 0,01 bis 1 : 1 (w/w) aufweist.

17. Verwendung der Folien nach einem der vorstehenden Ansprüche 1 bis 13 zum Beschichten von Kunststoffformkörpern.

18. Verwendung gemäß Anspruch 17, **dadurch gekennzeichnet, dass** der beschichtete Kunststoffformkörper aus Polyvinylchlorid besteht.

19. Verwendung nach einem der Ansprüche 17 oder 18, **dadurch gekennzeichnet, dass** das Aufbringen der Folie auf den zu schützenden Werkstoff mittels Coextrusion, Folienlamination oder Extrusionsbeschichtung erfolgt.

## Claims

1. Transparent foil composed of plastic with high UV resistance and high weathering resistance,
where the foil encompasses
a) poly(meth)acrylate and polyvinylidene fluoride in a ratio of from 1 : 0.01 to 1 : 1 (w/w);
and
b) a mixture composed of UV stabilizers and of UV absorbers.

2. Foil according to Claim 1,
**characterized in that**
the foil is a single-layer foil and the foil encompasses a mixture of poly(meth)acrylate and polyvinylidene fluoride in a ratio of from 1 : 0.1 to 1 : 0.5 (w/w).

3. Foil according to Claim 1,
**characterized in that**
the foil encompasses at least two sublayers, of which at least one is composed of poly(meth)acrylate and at least one other is composed of polyvinylidene fluoride.

4. Foil according to Claim 3,
**characterized in that**
the foil is composed of two sublayers, of which one is a poly(methyl) methacrylate layer and the other is a polyvinylidene fluoride layer.

5. Foil according to either of Claims 3 and 4,
**characterized in that**
it has been coextruded.

6. Foil according to any of the preceding claims,
**characterized in that**
its transparency is >91.5%.

7. Foil according to any of the preceding claims,
**characterized in that**
the weight-average molar mass M_{w} of the poly(meth)acrylate a) is ≥80 000 g/mol, determined by means of gel permeation chromatography against PMMA calibration standards.

8. Foil according to Claim 7,
**characterized in that**
the weight-average molar mass M_{w} of the poly(meth)acrylate a) is in the range from 80 000 g/mol to 180 000 g/mol.

9. Foil according to any of the preceding claims,
**characterized in that**
the poly(meth)acrylate a) is obtainable by polymerization of a composition whose polymerizable constituents comprise:
a. from > 50% by weight to 99.9% by weight of methyl methacrylate,
b. from 0.1% by weight to < 50% by weight of an acrylate having an ester radical deriving from a C1-C4 alcohol,
c. from 0% by weight to 10% by weight of monomers copolymerizable with the monomers a. and b.

10. Foil according to any of the preceding claims, **characterized in that**
the poly(meth)acrylate a) is obtainable by polymerization of a composition whose polymerizable constituents comprise:
a. rom 88% by weight to 92% by weight of methyl methacrylate,
b. from 8% by weight to 12% by weight of an acrylate having an ester radical deriving from a C1-C4 alcohol,
c. from 0% by weight to 10% by weight of monomers copolymerizable with the monomers a. and b.

11. Foil according to any of the preceding claims, **characterized in that**
the poly(meth)acrylate a) has been rendered impact-resistant by using an impact modifier, **in that**
the amount of impact modifier is from 1% to 50% by weight, based on the entirety of poly(meth)acrylate and impact modifier, and **in that**
the poly(meth)acrylate a) and the impact modifier derive from a core-shell polymer, where the shell forms a matrix composed of polymer in the foil.

12. Foil according to any of the preceding claims, **characterized by** a thickness in the range from 10 to 200 µm.

13. Foil according to Claim 12, **characterized by** a thickness in the range from 50 to 90 µm.

14. Process for the production of a transparent foil composed of plastic with high UV resistance and high weathering resistance, in which a foil is moulded from a composition encompassing
a) poly(meth)acrylate and polyvinylidene fluoride in a ratio of from 1 : 0.01 to 1 : 1 (w/w);
and
b) a mixture composed of UV stabilizers and of UV absorbers.

15. Process according to Claim 14, **characterized in that** the foil is moulded in the chill-roll process.

16. Process according to Claim 14, **characterized in that** the foil is a multi-sublayer foil, and **in that** a poly(meth)acrylate foil and a polyvinylidene fluoride foil are coextruded or laminated to one another, where one or both of the foils comprise(s) a mixture composed of UV stabilizers and of UV absorbers, or where one of the foils comprises at least one UV stabilizer and the other foil comprises at least one UV absorber, and where the laminated or coextruded multi-sublayer foil comprises the poly(meth)acrylate and polyvinylidene fluoride in a ratio of from 1 : 0.01 to 1 : 1 (w/w).

17. Use of the foils according to any of the preceding claims 1 to 13 for the coating of plastics mouldings.

18. Use according to Claim 17, **characterized in that** the coated plastics moulding is composed of polyvinyl chloride.

19. Use according to either of Claims 17 and 18, **characterized in that** coextrusion, foil lamination or extrusion coating is used to apply the foil to the material to be protected.

## Revendications

1. Film transparent en matière plastique à haute protection contre les UV et les agents atmosphériques, le film comprenant
a) du poly(méth)acrylate et du poly(fluorure de vinylidène) en un rapport de 1 : 1 0,01 à 1 : 1 (p/p) ;
et
b) un mélange de stabilisants UV et d'absorbeurs UV.

2. Film selon la revendication 1, **caractérisé en ce que** le film est monocouche et le film comprend un mélange de poly(méth)acrylate et poly(fluorure de vinylidène) en un rapport de 1 : 0,1 à 1 : 0,5 (p/p).

3. Film selon la revendication 1, **caractérisé en ce que** le film comprend au moins deux couches, dont au moins une consiste en poly(méth)acrylate et au moins une autre en poly(fluorure de vinylidène).

4. Film selon la revendication 3, **caractérisé en ce que** le film consiste en deux couches, dont une est une couche de polyméthacrylate (de méthyle) et l'autre est une couche de poly(fluorure de vinylidène).

5. Film selon la revendication 3 ou 4, **caractérisé en ce qu'**il est coextrudé.

6. Film selon l'une quelconque des revendications précédentes, **caractérisé en ce qu'**il a une transparence > 91,5 %.

7. Film selon l'une quelconque des revendications précédentes, **caractérisé en ce que** le poly(méth)acrylate a) présente une moyenne en poids de la masse moléculaire M_{w} de ≥ 80 000 g/mole, déterminée par chromatographie par perméation de gel contre un étalon PMMA.

8. Film selon la revendication 7, **caractérisé en ce que** le poly (méth) acrylate a) présente une moyenne en poids de la masse moléculaire M_{w} dans la plage de 80 000 g/mole à 180 000 g/mole.

9. Film selon l'une quelconque des revendications précédentes,
**caractérisé en ce que**
le poly(méth)acrylate a) peut être obtenu par polymérisation d'une composition comprenant en tant que constituants polymérisables :
a. > 50 % en poids à 99,9 % en poids de méthacrylate de méthyle,
b. 0,1 % en poids à < 50 % en poids d'un acrylate comportant un radical ester provenant d'un alcool en C₁-C₄,
c. 0 % en poids à 10 % en poids de monomères copolymérisables avec les monomères a. et b.

10. Film selon l'une quelconque des revendications précédentes,
**caractérisé en ce que**
le poly(méth)acrylate a) peut être obtenu par polymérisation d'une composition comprenant en tant que constituants polymérisables :
a. 88 % en poids à 92 % en poids de méthacrylate de méthyle,
b. 8 % en poids à 12 % en poids d'un acrylate comportant un radical ester provenant d'un alcool en C₁-C₄,
c. 0 % en poids à 10 % en poids de monomères copolymérisables avec les monomères a. et b.

11. Film selon l'une quelconque des revendications précédentes,
**caractérisé en ce que**
le poly(méth)acrylate a) est traité antichoc par un modificateur antichoc, **en ce que**
la quantité du modificateur antichoc est comprise entre 1 % en poids et 50 % en poids, par rapport à la somme de poly(méth)acrylate et modificateur antichoc, et **en ce que**
le poly(méth)acrylate a) et le modificateur antichoc proviennent d'un polymérisat à noyau-enveloppe, l'enveloppe constituant dans le film une matrice en polymère.

12. Film selon l'une quelconque des revendications précédentes,
**caractérisé par** une épaisseur dans la plage de 10 à 200 µm.

13. Film selon la revendication 12,
**caractérisé par** une épaisseur dans la plage de 50 à 90 µm.

14. Procédé pour la production d'un film transparent en matière plastique à haute protection contre les UV et les agents atmosphériques,
dans lequel
on met en forme un film à partir d'une composition comprenant
a) du poly(méth)acrylate et du poly(fluorure de vinylidène) en un rapport de 1 : 0,01 à 1 : 1 (p/p) ;
et
b) un mélange de stabilisants UV et d'absorbeurs UV.

15. Procédé selon la revendication 14, **caractérisé en ce qu'**on met le film en forme dans le procédé chill-roll.

16. Procédé selon la revendication 14, **caractérisé en ce que** le film consiste en un film multicouche, et **en ce qu'**on contrecolle ou coextrude l'un avec l'autre un film de poly(méth)acrylate et un film de poly(fluorure de vinylidène), l'un ou l'un et l'autre des films contenant un mélange de stabilisants UV et d'absorbeurs UV, ou l'un des films contenant au moins un stabilisant UV et l'autre des films contenant au moins un absorbeur UV, et le film multicouche contrecollé ou coextrudé comportant le poly(méth)acrylate et le poly(fluorure de vinylidène) en un rapport de 1 : 0,01 à 1 : 1 (p/p).

17. Utilisation des films selon l'une quelconque des revendications 1 à 13 précédentes, pour le revêtement de corps moulés en matière plastique.

18. Utilisation selon la revendication 17, **caractérisé en ce que** le corps moulé en matière plastique revêtu consiste en poly(chlorure de vinyle).

19. Utilisation selon la revendication 17 ou 18, **caractérisée en ce que** l'application du film sur le matériau à protéger s'effectue par coextrusion, stratification de film ou revêtement par extrusion.
